# EUROPÄISCHE PATENTSCHRIFT

(11) **EP 1 735 184 B1**
(45) Veröffentlichungstag und Bekanntmachung des Hinweises auf die Patenterteilung: **13.02.2008**
(21) Anmeldenummer: 05763588.0
(22) Anmeldetag: 15.02.2005
(51) Int. Cl.: B60N 2/64

(54) **FAHRZEUGSITZ, INSBESONDERE KRAFTFAHRZEUGSITZ**
VEHICLE SEAT, IN PARTICULAR A MOTOR VEHICLE SEAT
SIEGE DE VEHICULE, EN PARTICULIER SIEGE DE VEHICULE AUTOMOBILE

(30) Priorität: 14.04.2004 DE 102004018001
(43) Veröffentlichungstag der Anmeldung: 27.12.2006
(73) Patentinhaber: Recaro GmbH & Co. KG, 73230 Kirchheim/Teck (DE)
(72) Erfinder: KIRCHNER, Sascha, 73066 Uhingen-Holzhausen (DE); DITTLER, Matthias, 70563 Stuttgart (DE); SCHLENKER, Ulf, 73268 Erkenbrechtsweiler (DE); KAISER, Thomas, 73760 Ostfildern (DE)
(74) Vertreter: Patentanwälte Hosenthien-Held und Dr. Held
(86) Internationale Anmeldenummer: PCT/EP2005/001489
(87) Internationale Veröffentlichungsnummer: WO 2005/100086

(56) Entgegenhaltungen:
- EP-A- 1 110 809
- DE-C1- 10 112 022
- US-A- 4 746 168
- US-A1- 2003 197 413

## Beschreibung

Die Erfindung betrifft einen Fahrzeugsitz, insbesondere einen Kraftfahrzeugsitz, mit den Merkmalen des Oberbegriffs des Anspruches 1.

Aus der EP 1 110 809 A2 ist ein Fahrzeugsitz bekannt, bei der an einem serienmäßigen Sitzrahmen und/oder Lehnenrahmen mittels laschenförmiger oder drahtförmiger Adapter - ohne Änderung der Struktur - Grundmodule angebracht sind, welche wiederum Zusatzbaugruppen, wie Lordosenstützen, Seitenwangen, Stützbügel, Schulterstützen, Ventilatoren oder Sitzklimaanlagen tragen. Die Adapter sind beispielsweise mittels einer Schraub- oder Nietverbindung an den Rahmen oder daran befestigten Muttern angebracht, wobei die Rahmen möglichst wenig geschwächt werden sollen.

Die US 4,746,168 A zeigt einen Fahrzeugsitz der eingangs genannten Art mit einem Adapter, welcher an der Struktur angebracht ist und ein Polster trägt, dabei jedoch nur der Befestigung (beispielsweise des Bezuges) dient und keine Strukturfunktionen hat.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Indem der Adapter flächig und mit Formschluss an der Struktur anliegt, worunter zu verstehen sein soll, dass einerseits die Anlage über eine reine Punktberührung hinaus einen beachtlich Teil der einander zugewandten Flächen des Adapters und der Struktur einnimmt (großflächige Anlage) und zum anderen bei diesem beachtlichen Teil der einander zugewandten Flächen positive Vorsprünge und negative Vertiefungen der Struktur durch eine inverse Kontur des Adapters erwidert werden, wird die Möglichkeit einer Relativbewegung zwischen Adapter und Struktur auf wenige Richtungen eingeschränkt, ohne dass eine feste Verbindung notwendig wäre. Die Bewegungsmöglichkeit wird vorzugsweise weiter eingeschränkt auf die Montagerichtung, indem sich der Adapter zwischen zwei einander gegenüberliegenden Seiten der Struktur erstreckt, beispielsweise zwischen zwei gegenüberliegenden Schenkeln eines Rahmens. Die verbliebene Bewegungsmöglichkeit wird unterdrückt, indem ein Bezug über ein am Adapter anliegendes Polster und den Adapter gezogen und gespannt ist, der an der Struktur befestigt ist, wodurch Adapter und Struktur fest zusammengehalten werden. Im Bedarfsfalls kann der Adapter aber trotzdem zusätzlich an der Struktur befestigt sein, wofür vorzugsweise an der Struktur aus anderen Gründen vorhandene Öffnungen oder dergleichen verwendet werden.

Der Adapter ist die Schnittstelle zwischen der Struktur und dem Polster. Einerseits dient der an der Struktur angeordnete Adapter der Formgebung des Polsters, d.h. er beeinflusst - mit seiner eigenen Form und Ausgestaltung - maßgeblich die Form, die das Polster annimmt, insbesondere wenn der Adapter stark konturiert ist. Insoweit ist der Adapter dem Polster zugeordnet und wird wie ein integraler Bestandteil des Polsters behandelt, beispielsweise wenn er und das Polster mit einem gemeinsamen Bezug überzogen sind, wobei letzterer eben vorzugsweise bis zur Struktur reicht. Andererseits gibt die Struktur dem Adapter die für die Funktion der Formgebung des Polsters notwendige Abstützung, nämlich durch die erfindungsgemäße Anlage. Insoweit stellt sich der Adapter als vorteilhafte Ergänzung der Struktur dar, welche die Struktur in sportlicher, funktioneller und Komfort-Hinsicht aufwertet. Andernfalls könnte die Struktur ohne Adapter das Polster nur in einfacher Weise (mit nur geringer Formgebung und ohne Funktionen) abstützen.

Der Adapter ist vorzugsweise ein einstückiges Bauteil, welches vorzugsweise aus einem Hartschaum besteht, was die Herstellung und die Montage vereinfacht. Diese Ausbildung des Adapters ist vorteilhaft, wenn der Adapter sich in Längsrichtung der Sitzkomponente erstreckt und am Adapter seitlich formgebende Materialpartien mit Stützfunktion angeformt sind, um den Seitenhalt des Insassens gegenüber einer Struktur ohne Stützelemente zu verbessern und eine gegenüber angeschweißten Stützelementen verzugsfreie Montage zu gewährleisten. Dabei soll unter formgebend verstanden werden, daß die entsprechende Materialpartie einen deutlichen Einfluß auf die Form des Adapters hat, beispielsweise die Materialpartie eine Verdoppelung der Höhe des Adapters ohne Materialpartie ergibt. Zudem ist das verwendete Material vorteilhaft, wenn der Adapter eine passive Crashschutzfunktion aufweisen soll, gemäß welcher das Material des Adapters im Crashfall Energie absorbieren und/oder dissipieren soll, was den Insassenschutz erhöht. Im Falle des Sitzteils kann am Adapter eine Anti-Submarining-Rampe angeformt sein, was eine weitere Crashschutzfunktion bietet.

Der Adapter wird zur Erhöhung des Komforts für den Insassens vorzugsweise auch dazu verwendet, daß am Adapter einzelne Baugruppen angeordnet, integriert oder adaptiert, insbesondere gelagert und/oder angebracht, sind, insbesondere Wangen-Einsteller, Steuergeräte und Bezugseinhängungen, -abhängungen und -nachführungen, aber auch - im Falle der Lehne - Lordosenstützen und/oder Schulterneigungs-Einsteller und/oder - im Falle des Sitzteils - Sitzflächenverlängerungen.

Der Adapter mit den gegebenenfalls vorhandenen Baugruppen wertet den Fahrzeugsitz zu einem Sportsitz auf.

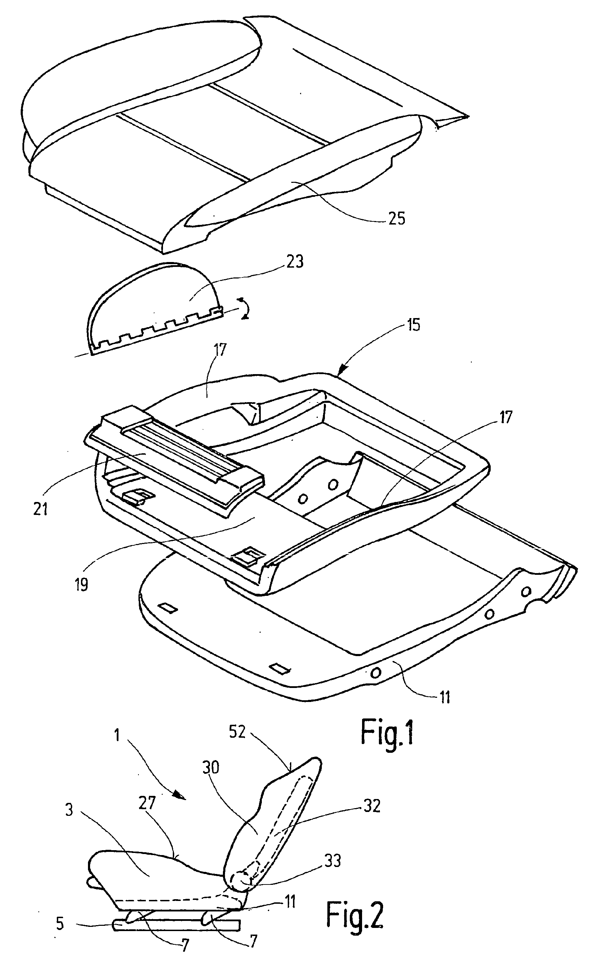

Im folgenden ist die Erfindung anhand eines in der Zeichnung dargestellten Ausführungsbeispiels näher erläutert. Es zeigen
- Fig. 1: eine Explosionszeichnung eines Sitzkissens des Ausführungsbeispiels,
- Fig. 2: eine schematische Seitenansicht des Ausführungsbeispiels, und

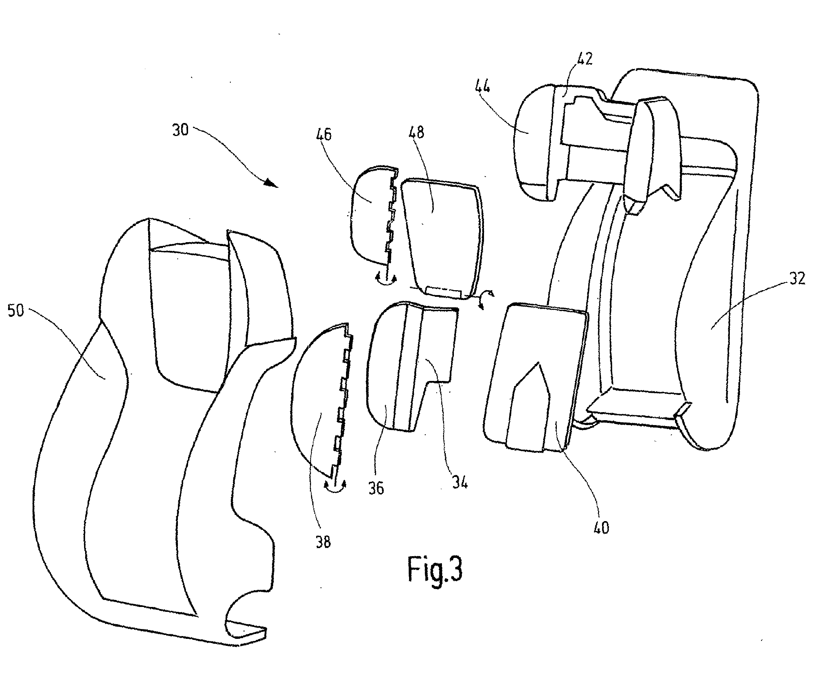

- Fig. 3: eine Explosionszeichnung einer Lehne des Ausführungsbeispiels.

Ein als Sportsitz ausgebildeter Fahrzeugsitz 1 für ein Kraftfahrzeug weist bei seinem eine erste Sitzkomponente definierenden Sitzteil 3 zwei Paare von parallelen Sitzschienen 5 zur Längseinstellung, welche die Sitzlängsrichtung definieren, zwei Paare von an den Sitzschienen 5 angelenkten Schwingen 7 zur Höheneinstellung und eine an den Schwingen 7 angelenkte und von diesen getragene Sitzkissen-Struktur 11 auf, wobei letztere aufgrund ihrer Form als umlaufender Rahmen mit vier Schenkeln auch als Sitzrahmen bezeichnet wird.

Die Sitzkissen-Struktur 11 trägt einen einstückigen Sitzkissen-Adapter 15 aus Hartschaum, insbesondere PUR. Der Sitzkissen-Adapter 15 ist wie die Sitzkissen-Struktur 11 als umlaufender Rahmen ausgebildet. Dabei legt sich der aufliegende Sitzkissen-Adapter 15 flächig und mit Formschluß an die 0-*t7,'--*sseri-'truktur ii an. Dadurch wird die Möglichkeit einer Relativbewegung von Si.tzkissen-Adapter 15 und Sitzkissen-Struktur 11 eingeschränkt, wobei aufgrund der Anlage des Sitzkissen-Adapters 15 an allen vier Schenkeln der Sitzkissen-Struktur 11 lediglich die Bewegungsmöglichkeit in der Montagerichtung verbleibt. Die Sitzkissen-Struktur 11 bleibt bei dieser Montage des Sitzkissen-Adapters 15 unverändert, insbesondere ungeschwächt.

Der Sitzkissen-Adapter 15 weist in Sitzlängsrichtung seitliche, hochgezogene, formgebende Materialpartien 17 mit Stützfunktion auf, um den Seitenhalt des Insassens gegenüber der relativ flachen Sitzkissen-Struktur 11 zu verbessern. Vorzugsweise weist der Sitzkissen-Adapter 15 noch eine vordere, nach vorne ansteigende, formgebende Materialpartie 19 auf, welche als Anti-Submarining-Rampe im Crashfall dient. Als weitere passive Crashschutzfunktion kann der Hartschaum im Crashfall Energie absorbieren und dissipieren.

Optional sind am Sitzkissen-Adapter 15 einzelne Baugruppen angeordnet, integriert oder adaptiert, insbesondere gelagert und/oder angebracht, beispielsweise eine in Längsrichtung des Fahrzeugsitzes 1 relativ zum Sitzkissen-Adapter 15, eventuell mittels eingeschäumter Schienen, längsverschiebbare Sitzflächenverlängerung 21 und ein Paar von Seitenwangen-Einstellern 23, welche - beispielsweise durch eine aufblasbare Blase angetrieben - um eine wenigstens näherungsweise in Sitzlängsrichtung verlaufende Achse schwenkbar sind, wie in der Zeichnung angedeutet, wo allerdings nur der rechte der beiden Seitenwangen-Einsteller 23 gezeigt ist. Es können auch Steuergeräte für Einsteller oder dergleichen am Sitzkissen-Adapter 15 befestigt sein. In den Sitzkissen-Adapter 15 können auch Bezugseinhängungen, -abhängungen und -nachführungen integriert sein, beispielsweise Haftverschlüsse oder Aufnahmen für Keder, insbesondere in der vorderen Materialpartie 19 unterhalb oder hinter der Sitzflächenverlängerung 21.

Auf dem Sitzkissen-Adapter 15 und den zugeordneten Baugruppen liegt ein Sitzkissen-Polster 25 auf, welches insbesondere als ein weiches Schaumteil ausgebildet ist und den Sitzkissen-Adapter 15 an den freiliegenden Seiten ganz oder teilweise übergreifen kann. Ein Sitzkissen-Bezug 27 ist über das Sitzkissen-Polster 25 und den Sitzkissen-Adapter 15 gezogen und gespannt, d.h. unter Vorspannung an der Sitzkissen-Struktur 11 und eventuell am Sitzkissen-Adapter 15 befestigt. Hierdurch werden Sitzkissen-Adapter 15 und Sitzkissen-Struktur 11 fest zusammengehalten. Die Sitzkissen-Struktur 11, der Sitzkissen-Adapter 15, das Sitzkissen-Polster 25, der Sitzkissen-Bezug 27 und zugeordnete Baugruppen definieren das Sitzkissen.

Ergänzend zum flächigen Formschluß kann der feste Zusammenhalt von Sitzkissen-Adapter 15 und Sitzkissen-Struktur 11 zusätzlich erreicht werden, indem beispielsweise eine Art Schnappverschluß zwischen einer Materialpartie des Sitzkissen-Adapters 15 und einer aus anderen Gründen vorhandenen Öffnung der Sitzkissen-Struktur 11, eine Klammer aus Federstahl oder ein andere kraftschlüssige Verbindung, oder eine Schraubverbindung oder dergleichen unter Ausnutzung vorhandener Öffnungen der Sitzkissen-Struktur 11 vorgesehen ist, wobei in den Sitzkissen-Adapter 15 Befestigungsmittel, wie Muttern oder dergleichen, aber auch Lochplatten, eingeschäumt sein können.

Der Fahrzeugsitz 1 weist als zweite Sitzkomponente eine neigungseinstellbare und freischwenkbar Lehne 30 mit einer Lehnen-Struktur 32 auf. Die auch als Lehnenrahmen bezeichnete Lehnen-Struktur 32 ist mittels zweier Beschläge 33 am hinteren Ende der Sitzkissen-Struktur 11 angebracht und definiert entlang ihrer größten Abmessung die Lehnenlängsrichtung.

Wie im Falle des Sitzkissens, sind auch hier einstückige Hartschaum-Adapter vorgesehen. Auf beiden Fahrzeugsitzseiten ist im unteren Bereich der Lehnen-Struktur 32 je ein Lehnenwangen-Adapter 34 aus PUR-Hartschaum vorgesehen, von denen in der Zeichnung nur der rechte dargestellt ist. Jeder Lehnenwangen-Adapter 34 liegt flächig und mit Formschluß an der Lehnen-Struktur 32 an. Zusätzlich ist der Lehnenwangen-Adapter 34 zur Weiterleitung der quer zur Lehnenlängsrichtung wirkenden Kräfte an der Lehnen-Struktur 32 unter Ausnutzung einer dort aus anderen Gründen vorhandenen Öffnung angeschraubt oder anderweitig befestigt. Wenn in abgewandelter Ausführung die beiden Lehnenwangen-Adapter 34 miteinander verbunden sind und nur eine Bewegungsmöglichkeit in Montagerichtung besteht, kann dieses Anschrauben oder anderweitige Verbinden entfallen.

Der Lehnenwangen-Adapter 34 weist in Lehnenlängsrichtung eine seitliche, hochgezogene, formgebende Materialpartie 36 mit Stützfunktion auf, um den Seitenhalt des Insassens gegenüber der Lehnen-Struktur 32 zu verbessern. Als passive Crashschutzfunktion kann der Hartschaum im Crashfall Energie absorbieren und dissipieren. Optional sind am Lehnenwangen-Adapter 34 einzelne Baugruppen angeordnet, integriert oder adaptiert, insbesondere gelagert und/oder angebracht, beispielsweise ein Lehnenwangen-Einsteller 38, welcher prinzipiell wie der Seitenwangen-Einsteller 23 aufgebaut und um eine wenigstens näherungsweise in Lehnenlängsrichtung verlaufende Achse schwenkbar ist, wie in der Zeichnung angedeutet, wo nur der rechte der beiden Lehnenwangen-Einsteller 38 gezeigt ist, und eine Seite einer Lordosenstütze 40, welche auf der anderen Seite am anderen Lehnenwangen-Adapter 34 angebracht ist. Es können wiederum Steuergeräte für Einsteller oder dergleichen am Lehnenwangen-Adapter 34 befestigt sein. In den Lehnenwangen-Adapter 34 können auch Bezugseinhängungen, -abhängungen und -nachführungen integriert sein, beispielsweise Haftverschlüsse oder Aufnahmen für Keder.

Oberhalb der beiden Lehnenwangen-Adapter 34 ist ein Schulterstützen-Adapter 42 angeordnet, welcher wiederum flächig und mit Formschluß an der Lehnen-Struktur 32 anliegt. Da diese formschlüssige Anlage auf zwei gegenüberliegenden Seiten der Lehnen-Struktur 32 erfolgt, ist nur eine Bewegung in Montagerichtung möglich. Ein Anschrauben oder eine anderweitige Befestigung des Schulterstützen-Adapters 42 an der Lehnen-Struktur 32, beispielsweise unter Ausnutzung einer dort aus anderen Gründen vorhandenen Öffnung, ist daher optional.

Der Schulterstützen-Adapter 42 weist in Lehnenlängsrichtung jeweils eine seitliche, hochgezogene, formgebende Materialpartie 44 mit Stützfunktion auf, um den Seitenhalt des Insassens gegenüber der Lehnen-Struktur 32 zu verbessern. Als passive Crashschutzfunktion kann der Hartschaum im Crashfall Energie absorbieren und dissipieren. Optional sind am Schulterstützen-Adapter 42 einzelne Baugruppen angeordnet, integriert oder adaptiert, insbesondere gelagert und/oder angebracht, beispielsweise ein Paar Schulterwangen-Einsteller 46, welche prinzipiell wie der Seitenwangen-Einsteller 23 aufgebaut und um eine wenigstens näherungsweise in Lehnenlängsrichtung verlaufende Achse schwenkbar sind, wie in der Zeichnung angedeutet, wo nur der rechte der beiden Schulterwangen-Einsteller 46 gezeigt ist, und einen Schulterneigungs-Einsteller 4ä, welcher wiederum prinzipiell wie der Seitenwangen-Einsteller 23 aufgebaut sein kann und um eine wenigstens näherungsweise senkrecht zur Lehnenlängsrichtung verlaufende Achse schwenkbar ist, wie in der Zeichnung angedeutet ist. Es können wiederum Steuergeräte für Einsteller oder dergleichen am Schulterwangen-Einsteller 46 befestigt sein. In den Schulterstützen-Adapter 42 können wiederum Bezugseinhängungen, -abhängungen und -nachführungen integriert sein.

An den Lehnenwangen-Adaptern 34, dem Schulterstützen-Adapter 42 und den zugeordneten Baugruppen, teilweise auch an der Lehnen-Struktur 32 direkt, liegt ein Lehnen-Polster 50 an, welches insbesondere als ein weiches Schaumteil ausgebildet ist und die besagten Adapter 34 und 42 an den freiliegenden Seiten ganz oder teilweise übergreifen kann. Ein Lehnen-Bezug 52 ist über das Lehnen-Polster 50 und die Adapter 34 und 42 gezogen und gespannt, d.h. unter Vorspannung an der Lehnen-Struktur 32 und eventuell an den Adaptern 34 und 42 befestigt. Hierdurch werden die Adapter 34 und 42, insbesondere der Schulterstützen-Adapter 42, einerseits und die Lehnen-Struktur 32 andererseits fest zusammengehalten, unabhängig davon, ob noch eine der zusätzlichen Verbindungen vorgenommen wurden.

### Bezugszeichenliste

- 1: Fahrzeugsitz
- 3: Sitzteil, erste Sitzkomponente
- 5: Sitzschiene
- 7: Schwinge
- 11: Sitzkissen-Struktur
- 15: Sitzkissen-Adapter
- 17: seitliche Materialpartie des Sitzkissen-Adapters
- 19: vordere Materialpartie des Sitzkissen-Adapters
- 21: Sitzflächenverlängerung
- 23: Seitenwangen-Einsteller
- 25: Sitzkissen-Polster
- 27: Sitzkissen-Bezug
- 30: Lehne, zweite Sitzkomponente
- 32: Lehnen-Struktur
- 33: Beschlag
- 34: Lehnenwangen-Adapter
- 36: seitliche Materialpartie des Lehnenwangen-Adapters
- 38: Lehnenwangen-Einsteller
- 40: Lordosenstütze
- 42: Schulterstützen-Adapter
- 44: seitliche Materialpartie des Schulterstützen-Adapters
- 46: Schulterwangen-Einsteller
- 48: Schulterneigungs-Einsteller
- 50: Lehnen-Polster
- 52: Lehnen-Bezug

## Patentansprüche

1. Fahrzeugsitz, insbesondere Kraftfahrzeugsitz, mit einem Sitzteil (3) und einer Lehne (30) als Sitzkomponenten, von denen wenigstens eine Sitzkomponente eine Struktur (11, 32), einen flächig und mit Formschluss an der Struktur (11, 32) anliegenden Adapter (15, 34, 42), ein am Adapter (15, 34, 42) anliegendes Polster (25, 50) und einen über das Polster (25, 50) gezogenen und gespannten Bezug (27, 52) aufweist, **dadurch gekennzeichnet, dass** der Bezug durch Befestigung an der Struktur (11, 32) den Adapter (15, 34, 42) und die Struktur (11, 32) fest zusammenhält.

2. Fahrzeugsitz nach Anspruch 1, **dadurch gekennzeichnet, dass** der Adapter (15, 42) zwischen zwei einander gegenüberliegenden Seiten der Struktur (11, 32) angeordnet ist.

3. Fahrzeugsitz nach Anspruch 1 oder 2, **dadurch gekennzeichnet, dass** der Adapter (15, 34, 42) zusätzlich an der Struktur (11, 32) befestigt ist.

4. Fahrzeugsitz nach einem der Ansprüche 1 bis 3, **dadurch gekennzeichnet, dass** der Adapter (15, 34, 42) einstückig aus einem Hartschaum besteht.

5. Fahrzeugsitz nach einem der Ansprüche 1 bis 4, **dadurch gekennzeichnet, dass** der Adapter (15, 34, 42) der Formgebung des Polsters (25, 50) und/oder der Anordnung, Integration oder Adaption von Baugruppen dient.

6. Fahrzeugsitz nach einem der Ansprüche 1 bis 5, **dadurch gekennzeichnet, dass** der Adapter (15, 34, 42) sich in Längsrichtung der Sitzkomponente erstreckt und am Adapter (15, 34, 42) seitlich formgebende Materialpartien (17, 36, 44) mit Stützfunktion angeformt sind.

7. Fahrzeugsitz nach Anspruch 5 oder 6, **dadurch gekennzeichnet, dass** am Adapter (15, 34, 42) einzelne Baugruppen gelagert und/oder angebracht, sind, insbesondere Wangen-Einsteller (23, 38, 46), Steuergeräte und Bezugseinhängungen, -abhängungen und -nachführungen.

8. Fahrzeugsitz nach Anspruch 7, **dadurch gekennzeichnet, dass** der Adapter (15, 34, 42) an der Lehne (30) vorgesehen ist und eine Lordosenstütze (40) und/oder einen Schulterneigungs-Einsteller (48) trägt.

9. Fahrzeugsitz nach einem der Ansprüche 5 bis 9, **dadurch gekennzeichnet, dass** der Adapter (15, 34, 42) im Sitzteil (3) vorgesehen ist und eine angeformte Anti-Submarining-Rampe (19) aufweist und/oder eine Sitzflächenverlängerung (21) lagert.

10. Fahrzeugsitz nach einem der Ansprüche 1 bis 9, **dadurch gekennzeichnet, dass** der Adapter (15, 34, 42) eine passive Crashschutzfunktion aufweist, indem das Material des Adapters (15, 34, 42) im Crashfall Energie absorbiert und/oder dissipiert.

## Claims

1. A vehicle seat, in particular a motor vehicle seat, with a seat part (3) and a backrest (30) as seat components, of which at least one seat component has a structure (11, 32), at least one adapter (15, 34, 42) bearing extensively and with a form-fitting connection on the structure (11, 32), a pad (25, 50) bearing against the adapter (15, 34, 42), and a cover (27, 52) being pulled stretched over the pad (25, 50) **characterized in that** the cover (27, 52) being fastened to the structure (11, 32) fixedly holds together the adapter (15, 34, 42) and the structure (11, 32).

2. The vehicle seat as claimed in claim 1, **characterized in that** the adapter (15, 42) is arranged between two mutually opposite sides of the structure (11, 32).

3. The vehicle seat as claimed in claim 1 or 2, **characterized in that** the adapter (15, 34, 42) is additionally fastened to the structure (11, 32).

4. The vehicle seat as claimed in one of claims 1 to 3, **characterized in that** the adapter (15, 34, 42) is composed as a single piece from a rigid foam.

5. The vehicle seat as claimed in one of claims 1 to 4, **characterized in that** the adapter (15, 34, 42) serves for shaping the pad (25, 50) and/or for the arrangement, integration or adaption of subassemblies.

6. The vehicle seat as claimed in one of claims 1 to 5, **characterized in that** the adapter (15, 34, 42) extends in the longitudinal direction of the seat component, and laterally shaping material portions (17, 36, 44) with a supporting function are integrally formed on the adapter (15, 34, 42).

7. The vehicle seat as claimed in claims 5 or 6, **characterized in that** individual subassemblies are mounted and/or fixed on the adapter (15, 34, 42), in particular cheek adjusters (23, 38, 46), control devices and cover attachments, cover disconnectors and cover guiding means.

8. The vehicle seat as claimed in claim 7, **characterized in that** the adapter (15, 34, 42) is provided on the backrest (30) and has a lordosis support (40) and/or a shoulder inclination adjuster (48).

9. The vehicle seat as claimed in one of claims 5 to 8, **characterized in that** the adapter (15, 34, 42) is provided in the seat part (3) and has an integrally formed anti-submarining ramp (19) and/or a seat surface extension (21).

10. The vehicle seat as claimed in one of claims 1 to 9, **characterized in that** the adapter (15, 34, 42) has a passive crash protection function by, in the event of a crash, the material of the adapter (15, 34, 42) absorbing and/or dissipating energy.

## Revendications

1. - Siège de véhicule, en particulier siège de véhicule automobile, présentant une partie de siège (3) et un dossier (30) comme composants de siège, dont au moins un composant de siège présente une structure (11, 32), un adaptateur (15, 34, 42) plat et appliqué à engagement positif sur la structure (11, 32), un coussin (25, 50) appliqué sur l'adaptateur (15, 34, 42) et une garniture (27, 52) étirée et tendue sur le coussin (25, 50), **caractérisé par le fait que** la garniture maintient solidement l'adaptateur (15, 34, 42) et la structure (11, 32) par fixation sur la structure (11, 32).

2. - Siège de véhicule selon la revendication 1, **caractérisé par le fait que** l'adaptateur (15, 42) est disposé entre deux côtés de la structure (11, 32) opposés l'un à l'autre.

3. - Siège de véhicule selon l'une des revendications 1 ou 2, **caractérisé par le fait que** l'adaptateur (15, 34, 42) est en outre fixé à la structure (11, 32).

4. - Siège de véhicule selon l'une des revendications 1 à 3, **caractérisé par le fait que** l'adaptateur (15, 34, 42) est constitué d'un seul tenant par de la mousse dure.

5. - Siège de véhicule selon l'une des revendications 1 à 4, **caractérisé par le fait que** l'adaptateur (15, 34, 42) sert au façonnage du coussin (25, 50) et/ou à la disposition, à l'intégration ou à l'adaptation de sous-ensembles.

6. - Siège de véhicule selon l'une des revendications 1 à 5, **caractérisé par le fait que** l'adaptateur (15, 34, 42) s'étend dans la direction longitudinale des composants de siège et sur l'adaptateur (15, 34, 42) sont formées des parties de matériau latéralement façonnantes (17, 36, 44) avec fonction de protection.

7. - Siège de véhicule selon l'une des revendications 5 ou 6, **caractérisé par le fait que**, sur l'adaptateur (15, 34, 42), sont montés et/ou rapportés des sous-ensembles individuels, notamment un dispositif (23, 38, 46) de réglage des parties latérales, des appareils de commande et des éléments d'accrochage, de décrochage et d'orientation de la garniture.

8. - Siège de véhicule selon la revendication 7, **caractérisé par le fait que** l'adaptateur (15, 34, 42) est prévu sur le dossier (30) et porte un soutien (40) contre la lordose et/ou un dispositif (48) de réglage de l'inclinaison des épaules.

9. - Siège de véhicule selon l'une des revendications 5 à 9, **caractérisé par le fait que** l'adaptateur (15, 34, 42) est prévu dans la partie de siège (3) et présente une rampe anti-sous-marinage façonnée (19) et/ou loge un prolongement de surface de siège (21)

10. - Siège de véhicule selon l'une des revendications 1 à 9, **caractérisé par le fait que** l'adaptateur (15, 34, 42) présente une fonction de protection passive contre les collisions, en ce que le matériau de l'adaptateur (15, 34, 42) absorbe et/ou dissipe l'énergie en cas de collision.
